# EUROPEAN PATENT SPECIFICATION

(11) **EP 1 347 040 B1**
(45) Date of publication and mention of the grant of the patent: **11.01.2006**
(21) Application number: 01999633.9
(22) Date of filing: 28.11.2001
(51) Int. Cl.: C12N 1/04, C12R 1/91

(54) **CELL-PRESERVATION LIQUID AND METHOD OF PRESERVING CELLS BY USING THE LIQUID**
ZELLKONSERVIERUNGSFLÜSSIGKEIT UND VERFAHREN ZUR ZELLKONSERVIERUNG MIT DIESER FLÜSSIGKEIT
LIQUIDE DE CONSERVATION DE CELLULES ET PROCEDE DE CONSERVATION DE CELLULES DANS LEQUEL LEDIT LIQUIDE EST UTILISE

(30) Priority: 04.12.2000 JP 2000368290
(43) Date of publication of application: 24.09.2003
(73) Proprietor: Lymphotec Inc., Tokyo (JP)
(72) Inventor: BAMBA, Kenzou, Shimotsuma-shi, Ibaraki 135-0043 (JP); KUROIWA, Yasuyuki, Hitachinaka-shi, Ibaraki 312-0062 (JP); SEKINE, Teruaki, Koto-ku, Tokyo 135-0043 (JP)
(74) Representative: Eddowes, Simon
(86) International application number: PCT/JP2001/010389
(87) International publication number: WO 2002/046368

(56) References cited:
- WO-A-93/07745
- WO-A-95/10291
- JP-A- 6 046 840
- JP-A- 7 255 469
- JP-A- 2000 201 672
- JP-A- 2001 354 575
- US-A- 4 004 975
- HIROAKI KASAI ET AL.: 'Straw cut ho ni yoru ushi taigai jusei yurai hai no glasska toketsu' BULLETIN OF THE STUDIES OF TOKUSHIMA PRIFECTUAL LIVESTOCK EXPERIMENT STATION vol. 41, November 2000, pages 1 - 6, XP002951071
- HIROSHI KANO ET AL.: 'Golden hamster mijuseiran no toketsu yukaigo no seizonsei ni tsuite' JOURNAL OF MAMMALIAN OVA RESEARCH vol. 6, no. 1, April 1989, pages 79 - 80, XP002951072
- VAN DER ELST J. ET AL.: 'The effect of equilibration temperature and time on the outcome of ultrarapid freezing of 1-cell mouse embryos' HUM. REPROD. vol. 10, no. 2, 1995, pages 379 - 383, XP002909462
- LUSCINSKAS F.W. ET AL.: 'Long-term cryopreservation of dog granulocytes' CRYOBIOLOGY vol. 20, no. 1, 1983, pages 1 - 6, XP002909463

## Description

### TECHNICAL FIELD

This invention relates to preservation liquid for preserving cells, which contains refined albumin and dimethyl sulfoxide, and a method for preserving cells by using the aforesaid preservation liquid with the aim of elevating an effective ratio of resurgent cells after preservation.

### BACKGROUND ART

Preservation liquid and a method for preserving cells are unsettled because of various natures of the original cells. For example, cells such as microorganisms are generally preserved in such a manner that the microorganisms are suspended in a microorganism cultivating culture medium containing about 10% of glycerol and kept at low temperature, or by freeze-drying the microorganisms. Preservation of mammalian cells is fulfilled by suspending the cells in a culture medium containing serum from cattle embryo and about 10% of dimethyl sulfoxide, preliminarily chilling the culture medium with the ceds, and then, storing it within a liquid nitrogen storage.

In preserving germ cells such as sperm, phosphate buffer solution containing monadelphous albumin is used as preservation liquid. In preserving mammalian cells, there has been generally used serum-containing preservation liquid or serum-free preservation liquid. As the serum-containing preservation liquid, there has been known cell-preservation liquid prepared by impregnating a culture medium with serum and dimethyl sulfoxide. Meanwhile, there has been known the serum-bree preservation liquid containing carboxymethyl cellulose instead of serum (Japanese Patent Application Publication HEI 6-46840(A)).

However, the serum-free preservation liquid has poor performance to preserve cells. Because an ordinary culture medium contains serum, the serum-containing preservation liquid has been used in many cases. Since it is more difficult to preserve the mammalian cells than microorganic cells or germ cells, the germ cells, which are easily preserved in comparison with the mammalian cells, have been preserved by making use of the preservation liquid for the mammalian cells.

However, the culture medium for the serum-containing preservation liquid varies with cells to be cultivated, and also, different lots of the serums are used therefor with the cells. Thus, it is difficult to use a domestically prepared cell-preservation liquid as liquid for preserving other cells. Besides, the serum-containing preservation liquid further contains not only cytokine, growth factor, hormone or the like as a serum-containing component, but also a culture medium with hosts of unnecessary components fundamentally undesired for preserving the cells, consequently being potentially altered in nature and bearing a problem as to affection of unknown viruses, which may possibly be contained in the serum.

That is, the serum-containing preservation liquid as noted above has various disadvantages of resulting in denaturing of the cells during preservation, contamination of unknown viruses, and difficulty of stabilizing the quality thereof due to indefinite of the constituents of the preservation liquid.

Accordingly, the present invention has an object to provide a cell-preservation liquid comprising palpable constituents and having excellent performance to preserve cells, which does not include serum and culture medium, and a method for preserving the cells by using the cell-preservation liquid.

### DISCLOSURE OF THE INVENTION

In order to eliminate the aforementioned various drawbacks suffered by the conventional cell-preservation liquid, according to the present invention, there is provided cell-preservation liquid comprising refined albumin and dimethyl sulfoxide. The refined albumin may be derived from cattle. In addition to the refined albumin and dimethyl sulfoxide, sugar may be contained thereto. The sugar may be monosaccharide.

Also, the sugar in the cell-preservation liquid of the present invention may be glucose. Other than the refined albumin and dimethyl sulfoxide, phosphate ion may be contained. Alternatively, other than the refined albumin and dimethyl sulfoxide, metal ion may be contained.

Furthermore, the metal ion in the cell-preservation liquid of the present invention may be divalent metal ion.

Moreover, according to the present invention, there is provided a method for preserving cells, which comprises suspending cells in the aforementioned cell-preservation liquid, dispensing the suspended cells to a plurality of preservation receptacles, and freezing the suspended cells without preliminary freezing to be preserved. In this cell preserving method, the cells dispensed to the preservation receptacles are suspended to have a concentration of 1 × 10³ to 1 X 10⁸ to be cryopreserved.

Other objects and advantages of the present invention will be described hereinafter.

### BEST MODE FOR CARRYING OUT THE INVENTION

The serum-containing cell-preservation liquid as described above has various disadvantages of resulting in denaturing of the cells during preservation, contamination of unknown viruses, and difficulty of stabilizing the quality thereof due to indefinite of the constituents of the preservation liquid. In order to eliminate such problems as posed by the serum-containing cell-preservation liquid, according to the present invention, there were developed cell-reservation liquid palpable constituents and having excellent performance to preserve cells, which does not include serum and culture medium, and a method for preserving the cells by using the cell-preservation liquid. Using the cell-preservation liquid according to the invention, experiments were repeatedly conducted.

Through the experiments, the serum-free and culture-free cell-preservation liquid according to the present invention was fabricated by preparing a main agent containing dimethyl sulfoxide, which has been so far used as an additive in the serum-containing preservation liquid, and albumin, which is contained in phosphate buffer solution used conventionally in preserving germ cells, and adding, to the main agent, auxiliary agents such as phosphate ion, divalent metal ion or monosaccharide. As the results of the experiments, there have been surprisingly discovered that the serum-free and culture-free cell-preservation liquid according to the present invention shows excellent performance capable of effectively preserving cells including not only mammalian cells, but also microorganic cells and germ cells. Thus, the cell-preservation liquid and the method for preserving the cells by using the cell-preservation liquid could be achieved by the present invention.

The present invention will be described hereinafter in more concrete terms. The cell-preservation liquid according to the present invention is featured by containing refined albumin and dimethyl sulfoxide. As the dimethyl sulfoxide used herein, there may be used a commonly known product on the market. As to the amount of the dimethyl sulfoxide applied for the desired purpose, dimethyl sulfoxide concentration below 0.1% (w/w) results in decrease in ability to preserving cells. Contrarily, provided that the concentration exceeds 50 % (w/w) to the total amount of the preservation liquid, the effect is unchanged. Accordingly, from the standpoint of the cost performance ratio, the dimethyl sulfoxide concentration may be determined to the range of 0.1 % to 50% (w/w), preferably, 1 % to 20% (w/w).

As to the albumin to be added to the dimethyl sulfoxide, the type of albumin may be optionally chosen in accordance with the type of the cells to be preserved, but there may be suitably used human albumin for preserving human cells for treating human beings. However, the sort of the albumin is not always limited thereto, and albumin derived from cattle or any other species may be used. Any kind of albumin may be used regardless of a method for refining it. The refined albumin on the order of fraction V in purity may be used.

As to the concentration of the albumin in the preservation liquid, the albumin of less than 0.001 % (w/w) is ineffective, and provided that the concentration of the albumin exceeds 25% (w/w), its effect is not changed. Accordingly, the albumin in the range of 0.01 % to 25% (w/w), preferably, 0.1 % to 5% (w/w), is practicable in the light of economical efficiency and handling property thereof.

Addition of the metal ion to the preservation liquid heightens the resurrection rate (cultivating efficiency) of living cells when renaturing the preserved cells. As the metal ion used herein, various metal ions such as divalent or tervalent metal ion, above all, divalent metal ion may be preferably used. In addition to the metal ion, for example, calcium ion, magnesium ion, iron ion, zinc ion, copper ion, and aluminum ion are found to be available. A low concentration of metal ion may suitably be used, but the metal ion of a concentration less than 0.0000001% (w/w) is ineffective, and contrarily, the concentration of the metal ion exceeds 1% (w/w) keeps its effect unchanged. Accordingly, the metal ion in the range of 0.0000001% to 5% (w/w), preferably, 0.1% to 5% (w/w), is practicable in view of economical efficiency.

Also, the sugar to be added to the preservation liquid has a function of heightening the resurrection rate (cultivating efficiency) of living cells when renaturing the preserved cells. As the sugar used herein, various monosaccharide, disaccharide and trisaccharide such as glucose, galactose, fructose, ribose, trehalose, and glucose are recommended. Of these components, glucose is recommended in view of economical efficiency.
As to the concentration of the sugar in the preservation liquid, the sugar of a concentration less than 0.1% (w/w) is ineffective, and contrarily, the concentration of the sugar exceeds 10% (w/w) keeps its effect unchanged. Accordingly, the sugar in the range of 0.1% to 10% (w/w), preferably, 1% to 5% (w/w), is practicable.

The phosphate ion can be used as phosphate buffer solution. The phosphate buffer solution includes Dulbecco's phosphate buffer solution and phosphate buffer solution. Instead of the aforementioned divalent or tervalent metal ion and phosphate buffer solution, various kinds of culture solutions may be used. The preservation for cells is carried out by suspending the cells in a tube for cryopreservation so as to have a concentration of 1 × 10³ to 1 × 10⁸ cells per ml to be cryopreserved and placing the tube at -80°C or in liquid nitrogen by way of example. In this case, temperature setting on the order of -4°C to -20°C suffices for short-term preservation. The cells can be cryopreserved in such a state that the cells suspended in the aforementioned preservation liquid are dispensed to the cell-preservation receptacles without preliminary freezing.

In preserving, the cells suspended in the cell-preservation liquid may be gradually lowered in temperature by using a program freezer or can be preserved by being quickly frozen. A process of thawing out the cryopreserved cells will be described hereinafter. The cryopreserved cells are restored by being thawed at room temperature or at 37°C in a constant temperature chamber and subjected to centrifugal separation by using a centrifugal separator to be separated to the cells and preservation liquid. The separated cells are rinsed with a suitable culture solution and then cultivated in a common cultivating manner.

Next, a method for evaluating the performance of preserving the cells according to the present invention will be explained. The performance of preserving the cells may be evaluated in such a manner that the cells suspended in the cell-preservation fluid and frozen are cryopreserved for several hours or days, or for several years according to circumstances, and then, the cryopreserved cells bring back to room temperature to be thawed and cultivated, and thereafter, the number of living cells is counted.

### [Embodiment]

The example actually practiced according to the present invention will be described hereinafter in detail.

### [1. Preparation of cell-preservation liquid]

By using an electronic weighing machine (416-65-81-01 made by TOKYO GARASU KIKAI CO., LTD.), 1.8 g of sodium hydrogen carbonate (Reagent of high grade 191-01305 made by Wako Pure Chemical Industries, Ltd.), 300 g of D(+) glucose (Reagent of high grade 041-00595 made by Wako Pure Chemical Industries, Ltd.), 3.6 g of HEPES (Reagent of high grade 324-01375 made by Dojindo Laboratories), and 96 g of PBS(-) powder (05913 made by Nissui Pharmaceutical Co., Ltd,) were measured out and taken in a beaker of 10 liters (1000BK10000 made by Asahi Techno Glass Corporation).

Then, 8 liters of injection solvent (Hikari Pharmaceutical Co., Ltd.) were measured out with a graduated measuring cylinder of 10 liters (1079 made by Sanplatec Corp.), added into the aforementioned beaker of 10 liters, and stirred to be dissolved with a magnetic stirrer (BS-38 made by Asahi Techno Glass Corporation). Further, 1 liter of DMSO (134-07 made by Nacalai Tesque, Inc.) was measured out with a graduated measuring cylinder of 2 liters (3022CYL2000S made by Asahi Techno Glass Corporation), added into the aforenoted graduated measuring cylinder of 10 liters and stirred with the magnetic stirrer.

After dissolution, 1 g of calcium chloride (039-00475 made by Wako Pure Chemical Industries, Ltd.) and 1 g of magnesium chloride hexahydrate (made by Hikari Pharmaceutical Co., Ltd.) were measured out and taken in the aforenoted beaker of 10 liters, and then, stirred to be dissolved with the magnetic stirrer (BS-38 made by Asahi Techno Glass Corporation). Further, 100 g of BSA (A-2934 made by Sigma-Aldrich Japan Inc.) were measured and taken in the aforesaid beaker of 10 liters, and then, after dissolution, diluted to 10 liters with an injection solvent. After fully dissolving the solution, it was filtrated through a spiral cap PF (12981 made by Genetics Inc. of Japan), consequently to obtain cell-preservation liquid.

### [2. Performance validation of cell-preservation liquid using P3U1 cells]

P3U1 ceUs derived from mouse myeloma were previously cultivated in a cultural flask (MS-2080R made by Sumitomo Bakelite Co., ltd.) containing culture medium prepared by admixing 45m ml of RPMI1640+7S (GM1104 made by Nikken Seibutsu Igaku Kenkyusho) with 50 ml of serum from cattle embryo (26140-079 made by Life Technologies Oriental Inc.) in a carbon dioxide incubator (CPD-300A made by Hirasawa Works Inc.)

Then, 10 µl of P3U1 cell-suspended solution were taken out therefrom with a pipet (NPX-20 made by Nichiryo Co., Ltd,) and poured in a 500 µl tube previously containing 20 µl of trypan blue solution (12301MTB0.5 made by Asahi Techno Glass Corporation). After slightly stirring the solution thus obtained, a part of solution was placed on a hemocytometer (03-202-2 made by Erma Inc.) to count the number of cells by using an inverted microscope (CK-2 made by Olympus Optical Co., Ltd.)

The counting found that 7.0 × 10⁵ living cells per ml were ascertained. The cell-suspended solution was dispensed by 50 ml respectively to two centrifuging tubes (2070 made by Nippon Becton Dickinson Company, Ltd.) and centrifugalized at 1500 rpm for 10 minutes at 20°C with a centrifugal separator (H700FR made by Kokusan) to precipitate the P3U1 cells.

Upon skimming supernatant fluid with a decanter, the cells suspended in the solution were loosened uniformly by using a test-tube mixer (MS-1 made by Asahi Techno Glass Corporation) and uniformly suspended in the cell-preservation liquid prepared by Process [1] described above so as to have a concentration of 4.4 × 10⁶ cells per ml. Then, the solution containing the cells suspended in the cell-preservation liquid was dispensed to serum tubes so as to have the total cell count of 4.4 × 10⁶ cells per tube. Thereafter, the tubes containing the solutions were placed into tube racks (9791-081 made by Asahi Techno Glass Corporation) and stored in a -80°C freezer (Sanyo Electric Co., Ltd.)

### [3. Resurrection of P3U1 cells from cryopreserved cells]

P3U1 cells were taken out from the -80°C freezer one year after frozen storage in the Process [2] described above, and then, placed for 4 minutes in a heat block (TAL-1G made by Taitec Co.) kept at 37°C inside to be thawed. With a dropper (SM251-1S made by Asahi Techno Glass Corporation), the P3U1 cells thus thawed in the heat block was poured into a 15 ml centrifuging tube (2095 made by Nippon Becton Dickinson Company, Ltd.) aseptically containing 10 ml of flushing culture medium (CM1101 made by Nikken Seibutsu Igaku Kenkyusho) within a clean bench (MCV-131BNF made by Sanyo Electric Co., Ltd.), and then, the cells were centrifugalized in an atmosphere of 20°C at 1200rpm for 5 minutes.

After centrifugation, supernatant fluid was skimmed with a decanter, and then, the cells settled in the solution were loosened uniformly by using the test-tube mixer and suspended in 2 ml of culture medium, and poured into a cultivating petri dish (1820-024N made by Asahi Techno Glass Corporation). Then, 10 ml of P3U1 cell-suspended solution was transferred into a 500 ml tube containing 20 ml of trypan blue solution, and after stirring slightly the solution, a part of solution was placed on a hemocytometer to count the number of cells by using the inverted microscope.

As the result of counting, 4.2 × 10⁶ living cells (effective cell number) per ml were ascertained. That is, it was ascertained that the effective ratio of resurgent cells was 96% relative to the cell number just before preservation of cells, which was 4.4 × 10⁶. The proliferation of P3U1 cells was confirmed under a microscope three days after cultivation. It was found from these results that the cell-preservation liquid according to the present invention has excellent function of preserving cells.

### [4. Ascertainment of cell-preserving performance of cell-preserving liquid by use of K562 cells]

K562 cells derived from human leukemia were cultivated in the same manner as Process [2] described above and counted in cell number. The number of living cells was 7.0 × 10⁵ cells per ml. 50 ml of cell-suspended solution were transferred into two centrifuging tubes (2027 made by Nippon Becton Dickinson Company, Ltd.) and centrifugalized at 1500 rpm for 10 minutes at 20°C with the Centrifugal Separator (H700FR made by Kokusan) to precipitate the K562 cells.

Upon skimming supernatant fluid with a decanter, the cells suspended in the solution were loosened uniformly by using the test-tube mixer (MS-1 made by Asahi Techno Glass Corporation) and uniformly suspended in the cell-preservation liquid so as to have a concentration of 3.0 × 10⁶ cells per mL Then, the solution containing the cells suspended in the cell-preservation liquid was dispensed to serum tubes (2722-002 made by Asahi Techno Glass Corporation) so as to have the total cell count of 3.0 × 10⁶ cells per tube. Thereafter, the tubes containing the solutions were placed into the tube racks (9791-081 made by Asahi Techno Glass Corporation) and stored in the -80°C freezer (Sanyo Electric Co., Ltd.)

### [5. Resurrection of K562 cells from cryopreserved cells]

The K562 cells were taken out one year after frozen storage in the Process [3] described above to be resurrected. As a result, it was ascertained that the K562 cells contained 2.9 × 10⁶ living cells per ml. That is, the effective ratio of resurgent cells was 95% relative to the cell number just before preservation of cells, which was 3.0 × 10⁶ cells per tube. The proliferation of K562 cells was confirmed under a microscope three days after cultivation. It was found from the results of the experiments that the cell-preservation liquid according to the present invention has excellent function of preserving cells.

As described above in detail, the cell-preservation liquid according to the present invention contains refined albumin and dimethyl sulfoxide, and further contains auxiliary agents such as phosphate ion, divalent metal ions and monosaccharides according to need. Thus, there is no call for adding serum or a culture medium to the preservation liquid. As a result, the cell-preservation liquid of the invention can be domestically prepared and used instead of other cell-preservation liquid. Furthermore, the present invention eliminates the need for using not only cytokine, growth factor, hormone or the like as a serum-containing component, but also culture solution with hosts of unnecessary components fundamentally undesired for preserving the cells. Therefore, the cell-preservation liquid of the invention is advantageously free from danger of denaturing the cells due to use of different culture solution for each cell to be cultivated and being contaminated with unknown viruses and can remove the need of using different lots of the serums for each cell.

Moreover, the present invention can provide the cell-preservation liquid comprising definite components has highly stable qualities and show an excellent performance to preserve cells, and an extremely useful method for preserving cells using the cell-preservation liquid. The cell-preservation liquid of the invention is suitable particularly for preserving mammalian cells, but also available for preserving protoplast, plant cells and germ cells. Besides, the present invention facilitates formulation of effective cell banks of various types using the cell-preservation liquid according to the invention.

## Claims

1. A preservation liquid for preserving cells, comprising (i)refined albumin at a concentration range of 0.1 to 5% (w/w), (ii) dimethyl sulfoxide and (iii)a sugar at a concentration of 0.1 to 5% (w/w), (iv)phosphate ions and (v)divalent metal ions at a concentration of 0.1 to 5% (w/w).

2. A preservation liquid as claimed in claim 1, wherein said refined albumin is derived from cattle.

3. A preservation liquid as claimed in claim 1, wherein said sugar is monosaccharide.

4. A preservation liquid as claimed in claim 3, wherein said monosaccharide sugar is glucose.

5. A preservation liquid as claimed in any preceding claim, wherein said dimethyl sulfoxide has a concentration of 0.1% to 50% (w/w), preferably 1% to 20% (w/w).

6. A method for preserving cells comprising the steps of, suspending cells in a preservation liquid as claimed in any preceding claim, dispensing said preservation liquid having said cells suspended therein to a plurality of preservation receptacles, and freezing said preservation liquid in each of said preservation receptacles to cryopreserve the cells suspended in said preservation liquid.

7. A method for preserving cells as claimed in claim 6, wherein said cells are suspended in said preservation liquid so as to have a concentration of 1 × 10³ to 1 × 10⁹ cells per ml to be cryopreserved.

## Patentansprüche

1. Konservierungsflüssigkeit zum Konservieren von Zellen, umfassend (i) gereinigtes Albumin mit einem Konzentrationsbereich von 0,1 bis 5 % (Gewicht/Gewicht); (ii) Dimethylsulfoxid und (iii) einen Zucker mit einer Konzentration von 0,1 bis 5 % (Gewicht/Gewicht); (iv) Phosphationen und (v) zweiwertige Metallionen bei einer Konzentration von 0,1 bis 5 % (Gewicht/Gewicht).

2. Konservierungsflüssigkeit nach Anspruch 1, wobei das gereinigte Albumin vom Rind abgeleitet ist.

3. Konservierungsflüssigkeit nach Anspruch 1, wobei der Zucker Monosaccharid ist.

4. Konservierungsflüssigkeit nach Anspruch 3, wobei der Monosaccharidzucker Glucose ist.

5. Konservierungsflüssigkeit nach einem vorangehenden Anspruch, wobei das Dimethylsulfoxid eine Konzentration von 0,1 bis 50 % (Gewicht/Gewicht), vorzugsweise 1 % bis 20 % (Gewicht/Gewicht), aufweist.

6. Verfahren zum Konservieren von Zellen, umfassend die Schritte von Suspendieren von Zellen in einer Konservierungsflüssigkeit nach einem vorangehenden Anspruch; Dosieren der Konservierungsflüssigkeit mit den darin suspendierten Zellen zu einer Vielzahl von Konservierungsgefäßen und Gefrieren der Konservierungsflüssigkeit in jedem der Konservierungsgefäße zum Cryokonservieren der in der Konservierungsflüssigkeit suspendierten Zellen.

7. Verfahren zum Konservieren von Zellen nach Anspruch 6, wobei die Zellen in der Konservierungsflüssigkeit suspendiert werden, sodass sie eine Konzentration von 1 × 10³ bis 1 × 10⁹ zu cryokonservierende Zellen pro ml aufweisen.

## Revendications

1. Liquide de conservation pour conserver des cellules, comprenant (i) de l'albumine purifiée à une concentration de 0,1 à 5 % (en poids/poids), (ii) du diméthylsulfoxyde et (iii) un sucre à une concentration de 0,1 à 5 % (en poids/poids), (iv) des ions phosphate et (v) des ions métalliques divalents à une concentration de 0,1 à 5 % (en poids/poids).

2. Liquide de conservation suivant la revendication 1, dans lequel ladite albumine purifiée est d'origine bovine.

3. Liquide de conservation suivant la revendication 1, dans lequel ledit sucre est un monosaccharide.

4. Liquide de conservation suivant la revendication 3, dans lequel ledit sucre consistant en un monosaccharide est le glucose.

5. Liquide de conservation suivant l'une quelconque des revendications précédentes, dans lequel ledit diméthylsulfoxyde a une concentration de 0,1 % à 50 % (en poids/poids), de préférence de 1 % à 20 % (en poids/poids).

6. Procédé pour conserver des cellules, comprenant les étapes consistant à mettre en suspension des cellules dans un liquide de conservation suivant l'une quelconque des revendications précédentes, à distribuer ledit liquide de conservation comprenant lesdites cellules en suspension dans une pluralité de réceptacles de conservation, et à congeler ledit liquide de conservation dans chacun desdits réceptacles de conservation pour la cryoconservation des cellules en suspension dans ledit liquide de conservation.

7. Procédé pour la conservation de cellules suivant la revendication 6, dans lequel lesdites cellules sont mises en suspension dans ledit liquide de conservation de manière à avoir une concentration de 1 × 10³ à 1 × 10⁹ cellules par ml à cryoconserver.
